# EUROPÄISCHE PATENTSCHRIFT

(11) **EP 3 550 255 B1**
(45) Veröffentlichungstag und Bekanntmachung des Hinweises auf die Patenterteilung: **21.10.2020**
(21) Anmeldenummer: 18165693.5
(22) Anmeldetag: 04.04.2018
(51) Int. Cl.: G01B 3/34, G01B 5/20, B23F 23/12

(54) **LEHRRING**
RING GAUGE
BAGUE DE CONTRÔLE

(43) Veröffentlichungstag der Anmeldung: 09.10.2019
(73) Patentinhaber: Frenco Gmbh, 90518 Altdorf (DE)
(72) Erfinder: Weiß, Norbert, 90475 Nürnberg (DE)
(74) Vertreter: Stippl, Hubert

(56) Entgegenhaltungen:
- CA-A- 380 606
- GB-A- 564 200

## Beschreibung

Die vorliegende Erfindung betrifft einen Lehrring zur attributiven Prüfung von Verzahnungen, insbesondere Passverzahnungen, gemäß dem Oberbegriff des Anspruchs 1.

Während der Fertigung und bei der Ausgangs- oder Eingangskontrolle von Verzahnungen, insbesondere von Passverzahnungen, genügen immer dann attributive Prüfmethoden, wenn keine Qualitätsstatistik benötigt wird. In solchen Fällen sind für Außenverzahnungen Lehrringe zur Sicherstellung der Qualität ausreichend. Jedes in der Fertigung hergestellte Produkt muss einer solchen Prüfung unterzogen werden. Der Prüfer setzt hierbei den eine Innenverzahnung aufweisenden Lehrring auf die Verzahnung auf und testet dabei, ob der Lehrring auf die Verzahnung aufschiebbar ist oder nicht. Hierbei muss der Prüfer oftmals tausende Prüfungen pro Tag durchführen. Vor allem bei Passverzahnungen erweist sich das Aufsetzen des Lehrrings auf das zu prüfende Teil oft schwierig, da das Auffinden der genauen Position der Verzahnung des Lehrrings zur Verzahnung des zu prüfenden Teils etwas Zeit benötigt. In Folge dessen ergibt sich zum einen ein zu hoher Zeitaufwand bei der Prüfung. Zum anderen kann es vorkommen, dass der Prüfer, wenn er die genaue Position der Verzahnung nicht in kurzer Zeit findet, zu früh entscheidet und das Teil dem Ausschuss zuordnet, obwohl es eigentlich aufgrund seiner Qualität nicht dem Ausschuss zuzuordnen wäre.

Ein Lehrring in Form einer vollverzahnten Gutlehre erfasst alle Einzelabweichungen der zu prüfenden Form über die Lehrenlänge und verkörpert eine größte zuverlässige Hüllverzahnung, welche fügbar sein muss.

Die GB 564 200 A offenbart einen zweiteiligen Lehrring zur Prüfung von Keilwellen, der eine Ausnehmung umfasst, in der eine Innenverzahnung vorgesehen ist. Der Lehrring besteht aus einem äußeren Ring, der den Kopfkreis der Innenverzahnung festlegt, sowie einem in den äußeren Ring einsetzbaren inneren Ring, der den Fußkreis der Innenverzahnung festlegt. Der innere Ring weist an einem Ende Vorsprünge auf, die in entsprechende Ausnehmungen des äußeren Rings eingesetzt werden. Am anderen Ende weist der innere Ring eine zylindrische Bohrung auf, in die die zu prüfende Keilwelle einführbar ist, wobei der Durchmesser dieser Bohrung dem Durchmesser des Fußkreises der Innenverzahnung entspricht.

Aus der CA 380 606 A geht ein Messring hervor, der eine zylindrische Bohrung aufweist, um entsprechende Außendurchmesser von zylinderförmigen Werkstücken zu prüfen. Am Ende der zylindrischen Bohrung befindet sich eine Rille mit einem nach außen sowie Richtung Bohrung erweiterten Durchmesser, womit eine Führung zur erleichterten Einführung des zu messenden Werkstücks hergestellt wird.

### Aufgabe der vorliegenden Erfindung

Die Aufgabe der vorliegenden Erfindung besteht darin, einen neuartigen Lehrring zur Verfügung zu stellen, der eine erleichterte Prüfung ermöglicht.

### Lösung der Aufgabe

Die Aufgabe wird durch die gesamte Lehre des Patentanspruchs 1 gelöst. Vorteilhafte Weiterbildungen der Erfindung ergeben sich aus den Unteransprüchen 2 bis 15.

Der erfindungsgemäße Lehrring zur Prüfung von Verzahnungen, insbesondere von Passverzahnungen, weist einen Lehrringkörper auf, wobei der Lehrringkörper eine Ausnehmung umfasst, in der eine Innenverzahnung vorgesehen ist, die Innenverzahnung einen Fußkreis mit einem Durchmesser D1 sowie einen Kopfkreis mit einem Durchmesser D2 festlegt, und wobei die Ausnehmung einen umlaufenden ringförmigen Mittenzentrierungsabschnitt aufweist, der in Verlängerung zur Innenverzahnung koaxial angeordnet ist. Der Mittenzentrierungsabschnitt ermöglicht es, dass die Mitte zwischen Lehrring und zu prüfender Verzahnung leichter gefunden werden kann. Dies bedeutet somit für den die Kontrolle von Verzahnungen durchführenden Prüfer, dass die Position der Verzahnungen zueinander leichter und somit schneller zu finden ist, was insbesondere bei der Überprüfung einer Vielzahl von Verzahnungen bzw. Passverzahnungen eine hohe Zeitersparnis mit sich bringt. Außerdem hat der Mittenzentrierungsabschnitt den Vorteil, dass Fehlentscheidungen des Prüfers über "Gut" oder "Ausschuss" eher vermieden werden können, insbesondere wenn der Prüfer sich irrtümlich zu früh für die Nichtannahme des zu überprüfenden verzahnten Werkstücks entscheidet, da er die genaue Position der Verzahnung nicht sogleich findet. Insbesondere auch bei einer waagrechten Einführung des zu prüfenden Werkstücks in den Lehrring wird die Mitte leichter gefunden. Der Mittenzentrierungsabschnitt kann z.B. auch als Vorzentrierung bezeichnet werden. Die Erfindung gewährleistet somit eine schnelle und verlässliche Qualitätsprüfung von Verzahnungen, insbesondere von Passverzahnungen. Eine einfache und schnelle Entscheidung über die Verbaubarkeit des verzahnten Werkstücks wird damit ermöglicht. Der ringförmige Mittenzentrierungsabschnitt weist einen Durchmesser D3 auf, der geringfügig kleiner als der Durchmesser D1 des Fußkreises der Innenverzahnung ist. Gleichzeitig kann der Durchmesser D3 des Mittenzentrierungsabschnitts geringfügig größer als der Durchmesser D4 des Kopfkreises der zu prüfenden Verzahnung sein. Auf diese Weise wird ein leichtes Einführen des zu prüfenden verzahnten Werkstücks ermöglicht, wobei sogleich die Mitte für die angrenzende Ausnehmung mit ihrer Innenverzahnung gefunden wird. Das weitere Einführen des zu prüfenden Werkstücks in die Innenverzahnung wird aufgrund der bereits gefundenen Mitte erleichtert. Die Kopflinie der Außenverzahnung des zu prüfenden Werkstücks kommt somit mit der Fußlinie des Durchmessers D2 der Innenverzahnung des Lehrrings nicht in Kontakt, sodass sich die entsprechenden Kopf- und Fußlinien beim Einführen des zu prüfenden Werkstücks in die Innenverzahnung nicht behindern bzw. blockieren.

Der Mittenzentrierungsabschnitt kann an die Innenverzahnung der Ausnehmung angrenzen.

Der Mittenzentrierungsabschnitt kann insbesondere eine glatte Innenwandung bzw. einen konstanten Durchmesser aufweisen. Somit ist das zu prüfende verzahnte Werkstück mit seiner Außenverzahnung leicht in den Mittenzentrierungsabschnitt einführbar.

Der Lehrring kann auch beidseitig, insbesondere auf den sich gegenüberliegenden Seiten, jeweils einen Mittenzentrierungsabschnitt aufweisen. Insbesondere bei relativ langen Lehrringen bzw. Lehrringkörpern kann eine solche beidseitige Anordnung eines Mittenzentrierungsabschnitts zweckmäßig sein. Der Verschleiß des Lehrrings ist an den entsprechenden Bereichen auf zwei Seiten verteilt, so dass der Lehrring länger im Einsatz bleiben kann.

Vorteilhafterweise kann der Durchmesser D3 des Mittenzentrierungsabschnitts um oder mindestens um die Höhe der Fußrundung eines Zahns der Innenverzahnung kleiner sein als der Durchmesser D1 des Fußkreises der Innenverzahnung. Mit diesen Maßen kann in einfacher Weise zunächst die Mitte gefunden werden und im nächsten Schritt sodann die geeignete Zahnstellung für den Eingriff der Zähne von Außen- und Innenverzahnung.

Der Durchmesser D1 des Fußkreises der Innenverzahnung kann um 0,1 mm bis 1,0 mm, insbesondere um ca. 0,5 mm, größer sein als der Durchmesser D4 des Kopfkreises der Außenverzahnung des zu prüfenden Werkstücks. Zweckmäßigerweise kann der Durchmesser D3 des Mittenzentrierungsabschnitts um 0,05 mm bis 0,25 mm, insbesondere um ca. 0,2 mm, größer sein als der Durchmesser D4 des Kopfkreises der Außenverzahnung.

Zweckmäßigerweise kann die Breite des ringförmigen Mittenzentrierungsabschnitts mindestens 0,1 mm betragen. Insbesondere kann der ringförmige Mittenzentrierungsabschnitt 0,1 - 15 mm, besonders vorzugsweise 2 - 10 mm, breit sein. Somit wird eine sichere und leichte Einführung des zu prüfenden Bauteils in den Mittenzentrierungsabschnitt gewährleistet, wobei das zu prüfende Bauteil auch gleichzeitig in seiner Position für die nächste zu prüfende Ebene, nämlich dem Finden der Zahnstellung, stabilisiert wird.

Der Lehrringkörper kann einteilig ausgestaltet sein. Es ist also möglich, dass sowohl die Innenverzahnung als auch der ringförmige Mittenzentrierungsabschnitt in einem Bauteil vorgesehen sind. Dabei kann das Bauteil aus Metall, insbesondere aus gehärtetem Metall, bestehen.

Vorteilhafterweise kann der Lehrringkörper auch mehrteilig sein. Die Mehrteiligkeit erlaubt es, verschiedene Werkstoffe für die unterschiedlichen Bereiche und damit die verschiedenen Anforderungen des Lehrrings vorzusehen.

So kann der Lehrringkörper einen ersten Lehrringkörperteil sowie einen zweiten Lehrringkörperteil umfassen, wobei der erste Lehrringkörperteil die Ausnehmung mit Innenverzahnung umfasst, und der zweite Lehrringkörperteil den Mittenzentrierungsabschnitt aufweist. Die Materialien des ersten und zweiten Lehrringkörperteils können somit den jeweiligen Anforderungen von Innenverzahnung und Mittenzentrierungsabschnitt angepasst sein. Außerdem können die beiden Lehrringkörperteile zunächst getrennt z.B. von verschiedenen Herstellern hergestellt werden und erst anschließend zusammengefügt werden.

Mit Vorteil kann ein Lehrringkörper, der nur die Ausnehmung mit Innenverzahnung umfasst, mit dem zweiten Lehrringkörperteil, der den Mittenzentrierungsabschnitt aufweist, nachgerüstet werden. So können die bisherigen Lehrringe, die nur eine Prüfung mit den eingangs genannten Problemen gestatten, weiter verwendet werden, wobei sie mit dem hinzugefügten zweiten Lehrringkörperteil die damit verbundenen Eigenschaften und Vorteile besitzen.

Der zweite Lehrringkörperteil kann aus einem Material bestehen, welches eine geringere Härte als das Material des ersten Lehrringkörperteils besitzt. Der mit dem Mittenzentrierungsabschnitt ausgestattete zweite Lehrringkörperteil dient vor allem der Findung der Mitte. Dabei ist es vorteilhaft, wenn das meist metallische, verzahnte zu prüfende Werkstück in den Lehrring eingeführt wird und dabei zunächst den Mittenzentrierungsabschnitt mit der geringeren Härte passiert. Der zweite Lehrringkörperteil mit seiner Innenverzahnung weist eine höhere Härte auf, welche für die Verschleißfestigkeit erforderlich ist, da darin die jeweilige Außenverzahnung der zu prüfenden Werkteile eingeführt wird und sie demnach diesen mechanischen Beanspruchungen standhalten muss.

Der zweite Lehrringkörperteil kann aus einem Material bestehen, welches eine geringere Wärmeleitfähigkeit als das Material des ersten Lehrringkörperteils besitzt. Dies hat den Vorteil, dass der erste Lehrringkörperteil bei Benutzung des Lehrrings durch den Prüfer, der den Lehrring am zweiten Lehrringkörperteil hält, von der Handwärme des Prüfers geschützt ist. Es ist wichtig, dass sich der erste Lehrringkörperteil mit seiner Innenverzahnung nicht durch Wärme verzieht.

Vorteilhafterweise kann der zweite Lehrringkörperteil aus Kunststoff oder einem auf Kunststoff basierenden Material bestehen. Ein solches Kunststoffteil ist ohne großen Aufwand und kostengünstig herstellbar. Zudem lassen sich Bauteile aus Kunststoff gut und angenehm in der Hand halten. Kunststoff hat zudem ein geringes Gewicht und eine geringe Wärmeleitfähigkeit. Außerdem lässt sich Kunststoff in unterschiedlichsten Farben einfärben, sodass damit eine Kennzeichnung des jeweiligen Lehrrings möglich ist.

Der zweite Lehrringkörperteil kann den ersten Lehrringkörperteil mindestens über einen Teilbereich dessen äußerer Umfangsfläche umgreifen. Der gesamte Lehrring ist damit am ersten Lehrringkörperteil greifbar und haltbar, was wiederum aufgrund des unterschiedlichen Materials von erstem und zweitem Lehrringkörperteil von Vorteil ist.

Um eine stabile und dauerhafte Befestigung sicherzustellen, kann der zweite Lehrringkörperteil auf den ersten Lehrringkörperteil aufgepresst sein. Wenn der zweite Lehrringkörperteil aus Kunststoff oder einem auf Kunststoff basierenden Material besteht, lässt er sich aufgrund seiner (wenn auch nur geringen) Elastizität besonders gut auf den ersten Lehrringkörperteil aufpressen.

Im Bereich der äußeren Umfangsfläche des ersten Lehrringkörperteils kann ein Vorsprung am zweiten Lehrringkörperteil in eine Ausnehmung am ersten Lehrringkörperteil eingreifen oder umgekehrt. Zweckmäßigerweise kann der Vorsprung um den gesamten inneren Umfang des zweiten Lehrringkörperteils sowie entsprechend die Ausnehmung um den gesamten äußeren Umfang des ersten Lehrringkörperteils verlaufen, sodass eine stabile Befestigung um den gesamten Umfang des Lehrrings sichergestellt ist.

Zweckmäßigerweise kann der zweite Lehrringkörperteil im Bereich seiner äußeren Umfangsfläche eine Oberflächenstrukturierung, insbesondere eine Riffelung, aufweisen. Mittels der Riffelung wird die Griffigkeit des Lehrrings erhöht, sodass er gut haltbar und handhabbar ist. Die Oberflächenstrukturierung bzw. die Riffelung kann in einfacher Weise in den zweiten Lehrringkörperteil aus Kunststoff oder aus einem auf Kunststoff basierenden Material bereits bei dessen Herstellung eingeformt werden.

Der zweite Lehrringkörperteil kann eine Farbmarkierung umfassen, sodass er zum Beispiel sogleich als Ausschusslehre oder Gutlehre erkennbar ist. Eine grüne Farbmarkierung kann dabei eine Gutlehre kennzeichnen.

Insbesondere kann das Material des zweiten Lehrringkörperteils eingefärbt sein, sodass eine zusätzliche Farbmarkierung entfallen kann. So kann der zweite Lehrringkörperteil grün einfärbt sein und mit seiner relativ großen Oberfläche dem Prüfer sofort vermitteln, dass es sich um eine Gutlehre handelt.

### Beschreibung der Erfindung anhand von Ausführungsbeispielen

Die Erfindung ist anhand von vorteilhaften Ausführungsbeispielen in den Zeichnungsfiguren näher erläutert. Diese zeigen:
- Fig. 1a: Eine perspektivische Darstellung eines Lehrrings mit mehrteiligem Lehrringkörper sowie eines Prüflings;
- Fig. 1b: Schnittdarstellung des Lehrrings sowie des Prüflings gemäß Figur 1a;
- Fig. 2a: perspektivische Darstellung eines weiteren Lehrrings mit mehrteiligem Lehrringkörper sowie eines Prüflings;
- Fig. 2b: Schnittdarstellung des Lehrrings sowie des Prüflings gemäß Figur 2a;
- Fig. 3a: perspektivische Darstellung eines Lehrrings mit einteiligem Lehrringkörper sowie eines Prüflings sowie
- Fig. 3b: Schnittdarstellung des Lehrrings sowie des Prüflings gemäß Figur 3a.

Bezugsziffer 1 bezeichnet den Lehrring zur Prüfung von Verzahnungen, insbesondere von Passverzahnungen, in seiner Gesamtheit. Bei derartigen Lehrringen handelt es sich um Gutlehren insbesondere für Bauteile mit Passverzahnungen. Die zu prüfenden verzahnten Werkstücke werden im Folgenden auch als Prüfling 13 bezeichnet. Die Lehrringe 1 in Form von vollverzahnten Gutlehren dienen als schnelle Qualitätsprüfung für Passverzahnungen, um deren Verbaubarkeit zu prüfen.

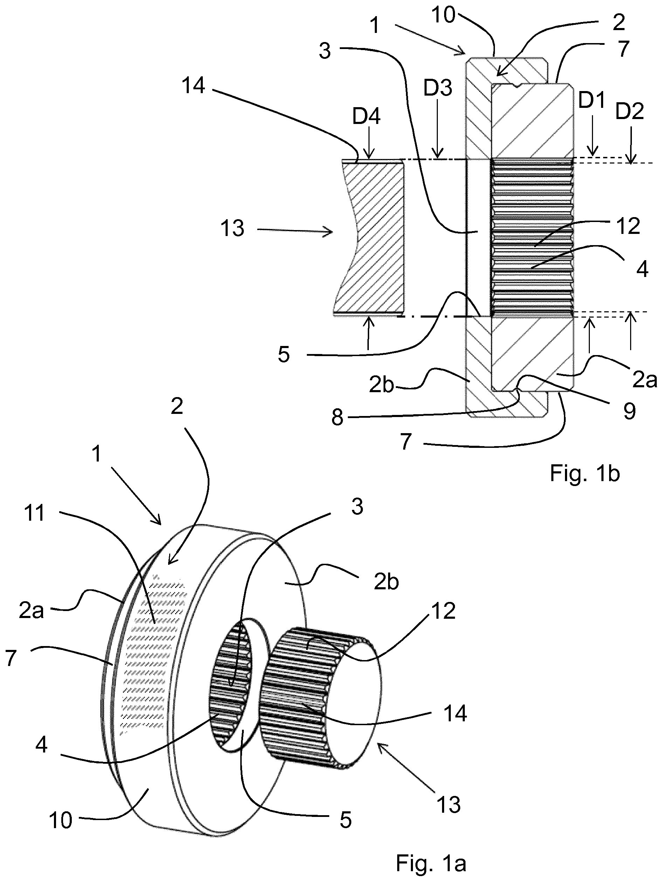

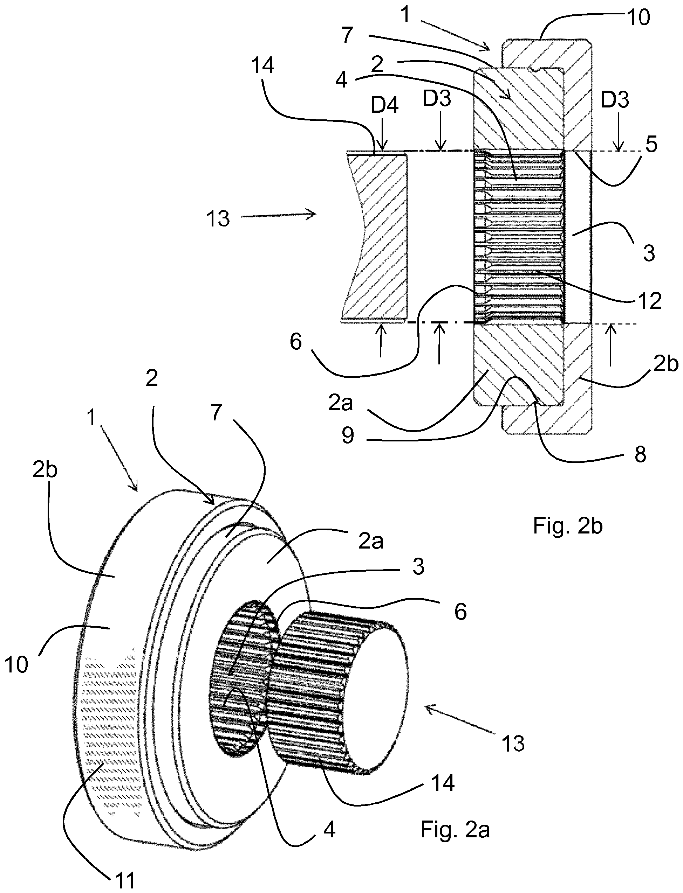

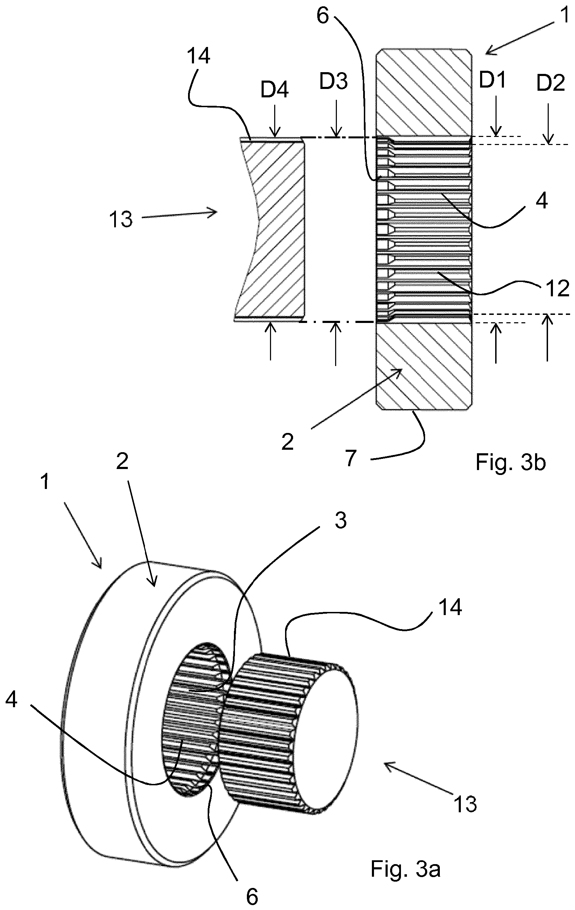

Der jeweilige Lehrring 1 weist einen Lehrringkörper 2 auf, welcher einteilig (siehe Fig. 3a, b) oder zweiteilig (siehe Fig. 1a, b und 2a, b) sein kann. Der Lehrringkörper 2 umfasst eine durchgängige Ausnehmung 3, in der eine Innenverzahnung 4 vorgesehen ist, wobei die Innenverzahnung 4 einen Fußkreis mit einem Durchmesser D1 sowie einen Kopfkreis mit einem Durchmesser D2 festlegt. Dabei weist die Ausnehmung 3 einen umlaufenden ringförmigen Mittenzentrierungsabschnitt (Bezugsziffer 5 in Fig. 1 und 2, Bezugsziffer 6 in Fig. 2 und 3) auf, der in Verlängerung zur Innenverzahnung 4 koaxial angeordnet ist. Der Mittenzentrierungsabschnitt 5, 6 dient dazu, eine gemeinsame Mitte von Prüfling 13 und Innenverzahnung 4 in Übereinstimmung zu bringen. Erst im nächsten Schritt, also sobald der Prüfling 13 bzw. dessen Außenverzahnung 14 den Mittenzentrierungsabschnitt 5, 6 passiert hat, muss erst die richtige Zahnstellung gefunden werden, um hier die tatsächliche Qualitätsprüfung der Außenverzahnung 14 des Prüflings 13 durchzuführen. Die Durchführung der Prüfung läuft damit auf zwei verschiedenen Ebenen ab, wobei die erste Ebene mittels des Mittenzentrierungsabschnitts 5, 6 zu einer Beschleunigung der Prüfung führt, da die beiden Prüfebenen hintereinander ausgeführt werden. Dies bedeutet, dass sich der Prüfling 13 schneller in den Lehrring 1 einführen lässt. Außerdem hat die erfindungsgemäße Konstruktion den Vorteil, dass eine Fehlentscheidung vermieden wird, wenn sich zu prüfende Werkstücke nur aufgrund einer fehlenden Mittenfindung nicht sogleich in die Innenverzahnung 4 einführen lassen.

Der Mittenzentrierungsabschnitt 5, 6 weist einen Durchmesser D3 auf, der geringfügig kleiner ist als der Durchmesser D1 des Fußkreises der Innenverzahnung 4. In den Zeichnungsfiguren ist dieser geringe Unterschied nicht erkennbar. So wird es ermöglicht, dass das zu prüfende, bereits zentrierte Werkstück direkt in die Ausnehmung 3 mit der Innenverzahnung 4 eingleitet, sofern die richtige Zahnstellung gefunden ist und es sich bei dem Prüfling 13 um ein Gutteil handelt.

Insbesondere kann der Durchmesser D3 um die Höhe der Fußrundung eines Zahns 12 der Innenverzahnung 4 kleiner sein als der Durchmesser D1.

Insbesondere ist der Durchmesser D1 des Fußkreises der Innenverzahnung 4 0,5 mm größer als der Außendurchmesser bzw. der Durchmesser D4 des Kopfkreises der Außenverzahnung 14 des Prüflings 13. Der Durchmesser D3 des Mittenzentrierungsabschnitts 5, 6 ist dabei insbesondere 0,2 mm größer als der Durchmesser D4 der Außenverzahnung 14. So beträgt beispielsweise der Durchmesser D4 der Außenverzahnung 14 20,2 mm, der Durchmesser D3 des Mittenzentrierungsabschnitts 5, 6 20,4 mm und der Durchmesser D1 des Fußkreises der Innenverzahnung 4 20,7 mm.

Die Breite des ringförmigen Mittenzentrierungsabschnitts 5, 6 kann mindestens 0,1 mm betragen. Vorzugsweise kann die Breite des Mittenzentrierungsabschnitts 5, 6 0,1 bis 10 mm betragen. Demnach kann eine Breite von nur 0,1 mm bereits ausreichen, um für den Prüfling 13 die Mitte zu finden.

Bei dem in Fig. 3a, b dargestellten Lehrring 1 ist der Lehrringkörper 2 einteilig. Der Lehrringkörper 2 besteht aus Metall, insbesondere aus Chromstahl, Pulverschnellstahl oder hochlegiertem Pulverschnellstahl. Eine hohe Verschleißfestigkeit ist damit gegeben. Der Mittenzentrierungsabschnitt 6 grenzt direkt an die Innenverzahnung 4 an und kann in den ersten Lehrringkörperteil 2a bzw. in die Innenverzahnung 4 direkt eingearbeitet sein.

In Fig. 1a, b sowie in Fig. 2a, b ist der Lehrringkörper mehrteilig ausgestaltet. Bei der Ausführungsvariante gemäß Fig. 1a, b umfasst der Lehrringkörper 2 einen ersten Lehrringkörperteil 2a sowie einen zweiten Lehrringkörperteil 2b. Der erste Lehrringkörperteil 2a beinhaltet die Ausnehmung 3 mit Innenverzahnung 4 und der zweite Lehrringkörperteil 2b weist den Mittenzentrierungsabschnitt 5 auf. Die Lehrringkörperteile 2a, 2b bestehen aus unterschiedlichen Materialien, die den jeweiligen Anforderungen gerecht werden.

Bei der Ausführungsvariante gemäß Fig. 2a, b ist außer dem Mittenzentrierungsabschnitt 5 im zweiten Lehrringkörperteil 2b ein weiterer Mittenzentrierungsabschnitt 6 im ersten Lehrringkörperteil 2a wie bei der Ausführungsvariante in Fig. 3 a, b vorgesehen.

Der zweite Lehrringkörperteil 2b besteht aus einem Material, welches eine geringere Härte als auch eine geringere Wärmeleitfähigkeit als das Material des ersten Lehrringkörperteils 2a besitzt. Dies ist von besonderem Vorteil, da der Prüfling 13 mit seiner Außenverzahnung 14 zunächst den weniger harten zweiten Lehrringkörperteil 2b passieren muss, was zunächst nur der Findung der Mitte dient, und sodann in die Innenverzahnung 4 des ersten Lehrringkörperteils 2a eingreifen muss, wobei der erste Lehrringkörperteil 2a eine deutlich höhere Verschleißfestigkeiten aufweisen muss. Indem der Lehrring 1 von dem Prüfer am zweiten Lehrringkörperteil 2b gehalten wird, dient die geringe Wärmeleitfähigkeit des Materials des zweiten Lehrringkörperteils 2b als Schutz vor einer Übertragung der Handwärme des Prüfers auf den ersten Lehrringkörperteil 2a.

Der zweite Lehrringkörperteil 2b besteht aus Kunststoff oder einem auf Kunststoff basierenden Material und kann somit kostengünstig herstellbar sein. Der erste Lehrringkörperteil 2a besteht aus Metall, insbesondere aus Chromstahl, Pulverschnellstahl oder hochlegiertem Pulverschnellstahl.

Der zweite Lehrringkörperteil 2b umgreift den ersten Lehrringkörperteil 2a mindestens über einen Teilbereich dessen äußerer Umfangsfläche 7, sodass der Lehrring 1 gut am zweiten Lehrringkörperteil 2b gehalten werden kann und die Prüfung leicht durchführbar ist. Außerdem kann der zweite Lehrringkörperteil 2b einen entsprechend umfassenden thermischen, aber auch mechanischen Schutz des ersten Lehrringkörperteils 2a darstellen.

Der zweite Lehrringkörperteil 2b ist auf den ersten Lehrringkörperteil 2a aufgepresst, sodass beide Teile sicher, fest, dauerhaft und koaxial miteinander verbunden sind. Dabei ist im Bereich der äußeren Umfangsfläche 7 des ersten Lehrringkörperteils 2a eine Ausnehmung 9 vorgesehen, in welche ein Vorsprung 8 des zweiten Lehrringkörperteils 2b eingreift. Die Koaxialität und Genauigkeit von erstem und zweitem Körperteil ist für die korrekte Ausrichtung erforderlich.

Der zweite Lehrringkörperteil 2b weist außerdem im Bereich seiner äußeren Umfangsfläche 10 eine Oberflächenstrukturierung in Form einer Riffelung 11 auf, womit der Lehrring insbesondere bei der durchzuführenden Prüfung gut haltbar ist und nicht aus der Hand rutschen kann. Die Riffelung 11 ist in den Figuren 1a und 2a nur ausschnittsweise zur Verdeutlichung dargestellt. Die Riffelung kann sich nur bereichsweise auf der Umfangsfläche 10 befinden oder sich über die gesamte Umfangsfläche 10 erstrecken.

Das Material des zweiten Lehrringkörperteils 2b ist in der Farbe (z. B. grün) eingefärbt, die bei Gutlehren verwendet wird. Der Prüfer erkennt somit bereits aus der Entfernung, um welchen Lehrring es sich handelt.

### BEZUGSZEICHENLISTE

- 1: Lehrring
- 2: Lehrringkörper
- 2a: erster Lehrringkörperteil
- 2b: zweiter Lehrringkörperteil
- 3: Ausnehmung
- 4: Innenverzahnung
- 5: Mittenzentrierungsabschnitt
- 6: Mittenzentrierungsabschnitt
- 7: äußere Umfangsfläche
- 8: Vorsprung
- 9: Ausnehmung
- 10: äußere Umfangsfläche
- 11: Riffelung
- 12: Zahn
- 13: Prüfling
- 14: Außenverzahnung

## Patentansprüche

1. Lehrring (1) zur Prüfung von Verzahnungen, insbesondere Passverzahnungen, mit einem Lehrringkörper (2), wobei der Lehrringkörper (2) eine Ausnehmung (3) umfasst, in der eine Innenverzahnung (4) vorgesehen ist, wobei die Innenverzahnung (4) einen Fußkreis mit einem Durchmesser D1 sowie einen Kopfkreis mit einem Durchmesser D2 festlegt, wobei
die Ausnehmung (3) einen umlaufenden ringförmigen Mittenzentrierungsabschnitt (5, 6) aufweist, der in Verlängerung zur Innenverzahnung (4) koaxial angeordnet ist,
**dadurch gekennzeichnet, dass**
der umlaufende ringförmige Mittenzentrierungsabschnitt (5, 6) einen Durchmesser D3 aufweist, der geringfügig kleiner als der Durchmesser D1 ist.

2. Lehrring (1) nach Anspruch 1, **dadurch gekennzeichnet, dass** der Durchmesser D3 um oder mindestens um die Höhe der Fußrundung eines Zahns der Innenverzahnung (4) kleiner ist als der Durchmesser D1.

3. Lehrring (1) nach mindestens einem der vorhergehenden Ansprüche, **dadurch gekennzeichnet, dass** die Breite des ringförmigen Mittenzentrierungsabschnitts (5, 6) mindestens 0,1 mm, vorzugsweise 0,1 bis 15 mm, besonders vorzugsweise 2 bis 10 mm, beträgt.

4. Lehrring (1) nach mindestens einem der vorhergehenden Ansprüche, **dadurch gekennzeichnet, dass** der Lehrringkörper (2) einteilig ist.

5. Lehrring (1) nach mindestens einem der vorhergehenden Ansprüche, **dadurch gekennzeichnet, dass** der Lehrringkörper (2) mehrteilig ist.

6. Lehrring (1) nach Anspruch 5, **dadurch gekennzeichnet, dass** der Lehrringkörper (2) einen ersten Lehrringkörperteil (2a) sowie eine zweiten Lehrringkörperteil (2b) umfasst, wobei der erste Lehrringkörperteil (2a) die Ausnehmung (3) mit Innenverzahnung (4) umfasst, und der zweite Lehrringkörperteil (2b) den Mittenzentrierungsabschnitt (6) aufweist.

7. Lehrring (1) nach Anspruch 6, **dadurch gekennzeichnet, dass** der der zweite Lehrringkörperteil (2b) aus einem Material besteht, welches eine geringere Härte als das Material des ersten Lehrringkörperteils (2a) und/oder der zweite Lehrringkörperteil (2b) aus einem Material besteht, welches eine geringere Wärmeleitfähigkeit als das Material des ersten Lehrringkörperteils (2a) besitzt.

8. Lehrring (1) nach Anspruch 6 oder 7, **dadurch gekennzeichnet, dass** der zweite Lehrringkörperteil (2b) aus Kunststoff oder einem auf Kunststoff basierenden Material besteht.

9. Lehrring (1) nach mindestens einem der Ansprüche 5 bis 6, **dadurch gekennzeichnet, dass** der zweite Lehrringkörperteil (2b) den ersten Lehrringkörperteil (2a) mindestens über einen Teilbereich dessen äußerer Umfangsfläche (7) umgreift.

10. Lehrring (1) nach mindestens einem der Ansprüche 5 bis 9, **dadurch gekennzeichnet, dass** der zweite Lehrringkörperteil (2b) auf den ersten Lehrringkörperteil (2a) aufgepresst ist.

11. Lehrring (1) nach mindestens einem der Ansprüche 5 bis 10, **dadurch gekennzeichnet, dass** im Bereich der äußeren Umfangsfläche (7) des ersten Lehrringkörperteils (2a) ein Vorsprung (8) am zweiten Lehrringkörperteil (2b) in eine Ausnehmung (9) am ersten Lehrringkörperteil (2a) oder umgekehrt eingreift.

12. Lehrring (1) nach mindestens einem der Ansprüche 5 bis 11, **dadurch gekennzeichnet, dass** der erste Lehrringkörperteil (2a) aus Metall besteht.

13. Lehrring (1) nach mindestens einem der Ansprüche 5 bis 12, **dadurch gekennzeichnet, dass** der zweite Lehrringkörperteil (2b) im Bereich seiner äußeren Umfangsfläche (10) eine Oberflächenstrukturierung, insbesondere eine Riffelung (11), aufweist.

14. Lehrring (1) nach mindestens einem der Ansprüche 5 bis 13, **dadurch gekennzeichnet, dass** der zweite Lehrringkörperteil (2b) eine Farbmarkierung umfasst.

15. Lehrring (1) nach mindestens einem der Ansprüche 5 bis 14, **dadurch gekennzeichnet, dass** Material des zweiten Lehrringkörperteils (2b) eingefärbt ist.

## Claims

1. Ring gauge (1) for inspecting toothings, in particular splines, having a ring gauge body (2), wherein the ring gauge body (2) comprises a cutout (3) in which an internal toothing (4) is provided, wherein the internal toothing (4) defines a root circle having a diameter D1 and a tip circle having a diameter D2, wherein
the cutout (3) has a circumferential ring-shaped centring portion (5, 6), which is arranged coaxially as an extension with respect to the internal toothing (4),
**characterized in that**
the circumferential ring-shaped centring portion (5, 6) has a diameter D3 which is slightly smaller than the diameter D1.

2. Ring gauge (1) according to Claim 1, **characterized in that** the diameter D3 is smaller than the diameter D1 by or at least by the height of the root rounding of a tooth of the internal toothing (4).

3. Ring gauge (1) according to at least one of the preceding claims, **characterized in that** the width of the ring-shaped centring portion (5, 6) is at least 0.1 mm, preferably 0.1 to 15 mm, particularly preferably 2 to 10 mm.

4. Ring gauge (1) according to at least one of the preceding claims, **characterized in that** the ring gauge body (2) is in one part.

5. Ring gauge (1) according to at least one of the preceding claims, **characterized in that** the ring gauge body (2) is in multiple parts.

6. Ring gauge (1) according to Claim 5, **characterized in that** the ring gauge body (2) comprises a first ring gauge body part (2a) and a second ring gauge body part (2b), wherein the first ring gauge body part (2a) comprises the cutout (3) with internal toothing (4), and the second ring gauge body part (2b) has the centring portion (6).

7. Ring gauge (1) according to Claim 6, **characterized in that** the second ring gauge body part (2b) is composed of a material which has a lower hardness than the material of the first ring gauge body part (2a), and/or the second ring gauge body part (2b) is composed of a material which has a lower thermal conductivity than the material of the first ring gauge body part (2a).

8. Ring gauge (1) according to Claim 6 or 7, **characterized in that** the second ring gauge body part (2b) is composed of a plastic or of a plastic-based material.

9. Ring gauge (1) according to at least one of Claims 5 to 6, **characterized in that** the second ring gauge body part (2b) engages around the first ring gauge body part (2a) at least over a partial region of the outer circumferential surface (7) of said first ring gauge body part.

10. Ring gauge (1) according to at least one of Claims 5 to 9, **characterized in that** the second ring gauge body part (2b) is pressed onto the first ring gauge body part (2a) .

11. Ring gauge (1) according to at least one of Claims 5 to 10, **characterized in that**, in the region of the outer circumferential surface (7) of the first ring gauge body part (2a), a protrusion (8) on the second ring gauge body part (2b) engages into a recess (9) on the first ring gauge body part (2a), or vice versa.

12. Ring gauge (1) according to at least one of Claims 5 to 11, **characterized in that** the first ring gauge body part (2a) is composed of metal.

13. Ring gauge (1) according to at least one of Claims 5 to 12, **characterized in that** the second ring gauge body part (2b), in the region of its outer circumferential surface (10), has a surface structuring, in particular a fluting (11).

14. Ring gauge (1) according to at least one of Claims 5 to 13, **characterized in that** the second ring gauge body part (2b) comprises a colour marking.

15. Ring gauge (1) according to at least one of Claims 5 to 14, **characterized in that** material of the second ring gauge body part (2b) is pigmented.

## Revendications

1. Bague-étalon (1) pour contrôler des dentures, en particulier des dentures ajustées, comprenant un corps de bague-étalon (2), le corps de bague-étalon (2) comprenant un évidement (3) dans lequel est prévue une denture intérieure (4), la denture intérieure (4) définissant un cercle de base avec un diamètre D1 ainsi qu'un cercle de tête avec un diamètre D2,
l'évidement (3) présentant une portion de centrage centrale annulaire périphérique (5, 6) qui est disposée coaxialement dans le prolongement de la denture intérieure (4),
**caractérisée en ce que**
la portion de centrage centrale annulaire périphérique (5, 6) présente un diamètre D3 qui est légèrement plus petit que le diamètre D1.

2. Bague-étalon (1) selon la revendication 1, **caractérisée en ce que** le diamètre D3 est inférieur au diamètre D1 dans la mesure de la hauteur de l'arrondi de base ou au moins de la hauteur de l'arrondi de base d'une dent de la denture intérieure (4).

3. Bague-étalon (1) selon au moins l'une quelconque des revendications précédentes, **caractérisée en ce que** la largeur de la portion de centrage centrale annulaire (5, 6) vaut au moins 0,1 mm, de préférence 0,1 à 15 mm, particulièrement préférablement 2 à 10 mm.

4. Bague-étalon (1) selon au moins l'une quelconque des revendications précédentes, **caractérisée en ce que** le corps de bague-étalon (2) est réalisé d'une seule pièce.

5. Bague-étalon (1) selon au moins l'une quelconque des revendications précédentes, **caractérisée en ce que** le corps de bague-étalon (2) est réalisé en plusieurs parties.

6. Bague-étalon (1) selon la revendication 5, **caractérisée en ce que** le corps de bague-étalon (2) présente une première partie de corps de bague-étalon (2a) ainsi qu'une deuxième partie de corps de bague-étalon (2b), la première partie de corps de bague-étalon (2a) comprenant l'évidement (3) avec la denture intérieure (4), et la deuxième partie de corps de bague-étalon (2b) présentant la portion de centrage centrale (6).

7. Bague-étalon (1) selon la revendication 6, **caractérisée en ce que** la deuxième partie de corps de bague-étalon (2b) se compose d'un matériau qui présente une plus faible dureté que le matériau de la première partie de corps de bague-étalon (2a) et/ou la deuxième partie de corps de bague-étalon (2b) se compose d'un matériau qui présente une plus faible conductibilité thermique que le matériau de la première partie de corps de bague-étalon (2a).

8. Bague-étalon (1) selon la revendication 6 ou 7, **caractérisée en ce que** la deuxième partie de corps de bague-étalon (2b) se compose de plastique ou d'un matériau à base de plastique.

9. Bague-étalon (1) selon au moins l'une quelconque des revendications 5 et 6, **caractérisée en ce que** la deuxième partie de corps de bague-étalon (2b) vient en prise autour de la première partie de corps de bague-étalon (2a) au moins sur une région partielle de sa surface périphérique extérieure (7) .

10. Bague-étalon (1) selon au moins l'une quelconque des revendications 5 à 9, **caractérisée en ce que** la deuxième partie de corps de bague-étalon (2b) est pressée sur la première partie de corps de bague-étalon (2a).

11. Bague-étalon (1) selon au moins l'une quelconque des revendications 5 à 10, **caractérisée en ce que** dans la région de la surface périphérique extérieure (7) de la première partie de corps de bague-étalon (2a), une saillie (8) au niveau de la deuxième partie de corps de bague-étalon (2b) vient en prise dans un évidement (9) au niveau de la première partie de corps de bague-étalon (2a), ou inversement.

12. Bague-étalon (1) selon au moins l'une quelconque des revendications 5 à 11, **caractérisée en ce que** la première partie de corps de bague-étalon (2a) se compose de métal.

13. Bague-étalon (1) selon au moins l'une quelconque des revendications 5 à 12, **caractérisée en ce que** la deuxième partie de corps de bague-étalon (2b) présente, dans la région de sa surface périphérique extérieure (10), une structuration de surface, en particulier un rainurage (11).

14. Bague-étalon (1) selon au moins l'une quelconque des revendications 5 à 13, **caractérisée en ce que** la deuxième partie de corps de bague-étalon (2b) comprend un marquage de couleur.

15. Bague-étalon (1) selon au moins l'une quelconque des revendications 5 à 14, **caractérisée en ce que** le matériau de la deuxième partie de corps de bague-étalon (2b) est coloré.
